# EUROPEAN PATENT APPLICATION

(11) **EP 2 127 946 A1**
(43) Date of publication of application: **02.12.2009**
(21) Application number: 08104096.6
(22) Date of filing: 26.05.2008
(51) Int. Cl.: B60Q 1/30

(54) **Trailer lighting system**

(71) Applicant: Busscher, Th.S.G., 7595 LG Weerselo (NL)
(72) Inventor: Busscher, Th.S.G., 7595 LG Weerselo (NL)
(74) Representative: Bakker, Hendrik

(57) **Abstract**

The invention relates to a trailer lighting system (1') comprising connection means (2) for connecting the system (1') to a towing vehicle (17), lighting elements (12.1 to 12.n) and wiring (5.1 to 5.n) for interconnecting said connection means (2) and/or said lighting elements (4.1 to 4.n). Compared to conventional trailer lighting systems (1), the trailer lighting system (1') according to the invention uses less wiring and is easier to install.

## Description

The invention relates to a trailer lighting system comprising connection means for connecting the system to a towing vehicle, lighting elements and wiring for interconnecting said connection means and/or said lighting elements.

Such a trailer lighting system is widely used in trailers and is a standardized method to connect the trailer lighting system to the lighting system of the towing vehicle.

In current trailer lighting systems, each light group of the trailer has a separate connection to the lighting system of the towing vehicle. A light group is a set of light elements, which must be activated or deactivated simultaneously (For example, brake lights, reversing lights etc). In order to activate a light group, power is applied to corresponding connection.

The disadvantage of trailer lighting system according to the state of the art is that a lot of wiring is needed to connect each light group to the towing vehicle. Also, the fact that each light group needs separate wiring to the towing vehicle adds to the probability of making mistakes during the installation of the trailer lighting system.

The trailer lighting system according to the invention provides a system that does not have these disadvantages. To lift the mentioned disadvantages, the trailer lighting system according to the invention is provided with a controller connected to the connections means and the lighting elements, wherein the controller has encoding means for operating the lighting elements by sending encoded control signals to the lighting elements using a communication protocol, and that the system is further provided with identifying means, detection means and switching means wherein the identifying means are arranged for identifying the intended function of the lighting elements, the detection means are arranged for receiving said encoded control signals, for decoding the control signals and for operating the switching means in order to operate the lighting elements and that all elements of the system are provided with a common power line. By using the combined features of the trailer lighting system the total wiring used can be greatly reduced, since no separate power line is needed from the lighting system of the towing vehicle to each light element of the trailer lighting system. By using identifying means, the intended function of each lighting element can be individually controlled. This will reduce the amount of installation errors greatly, and therefore reduces the amount of time necessary to install a trailer lighting system.

Preferably, in the trailer lighting system according to the invention, the controller comprises pulse generation means and the detection means comprises pulse counting means, and the lighting elements are controlled by the controller using a pulse based serial communication protocol. Communication by means of pulses can be achieved by a limited number of inexpensive electrical components and is therefore a preferred way to establish communication between the controller and the detection means. By using a one way communication control, the number of electrical components in both the controller and detection means can be further decreased. However, a two-way communication protocol is a possibility.

According to a first embodiment of the trailer lighting system according to the invention, the said identifying means are used to group said lighting elements into lighting groups and said communication protocol comprises a start pulse and for each active lighting group k 2^{k} pulses, wherein k= 1, 2, ...,n. By using this simple communication protocol, the number of electrical components used by the controller and detection means can be kept to a minimum. Also, the number of lighting groups to be controlled can be easily extended as the sequence of pulses does not have a fixed length.

According to a second embodiment of the trailer lighting system according to the invention, the said identifying means are used to group said lighting elements into lighting groups and said communication protocol comprises a start pulse, a sequence of n pulses in a defined time frame, where n is at least the number of lighting groups and spaced apart by a defined time period, and optionally a parity pulse and one or more stop pulses. This is a more complex communication protocol the protocol as mentioned above, but certainly feasible.

According to a third embodiment of the trailer lighting system according to the invention, the controller comprises means for simultaneous generation of multiple sine waves with different frequency and the detection means comprises sine wave frequency detection means, and wherein the lighting elements are controlled by the controller using a frequency based parallel communication protocol. Frequency based communication is in this case more expensive than pulse based communication.

In another embodiment of the trailer lighting system according to the invention, the control signals are superimposed on the common power line of the system. This eliminates the need for separate wiring for the control signals, which will further decrease the amount of wiring.

In yet another embodiment of the trailer lighting system according to the invention, the controller and the lighting elements are interconnected by the wiring in a parallel fashion. This drastically reduces the amount of wiring and the time to install the trailer lighting system. Preferably, in order to avoid malfunctions due to bad electrical connections, a separate ground wire is used in the trailer lighting. However, a common ground for each element (i.e. the chassis of the trailer) in the trailer lighting system can be used, where only one wire has to be used to connect each light element in the trailer lighting system.

In yet another embodiment of the trailer lighting system according to the invention, the controller is integrated into the connection means. By integrating the controller into the connection means, there is no need for an additional housing to accommodate the controller. Also, a connection means as used in the current state of the art can be made waterproof and therefore suitable to place the controller.

Preferably, the detection means and switching means are integrated into the lighting elements.

In an elegant embodiment of the trailer lighting system according to the invention, the controller is further provided with means for detection of a malfunctioning of one or more lighting elements and means for communication said malfunctioning to the towing vehicle.

In a practical embodiment of the above mentioned embodiment, the means for detection of a malfunctioning of one or more lighting elements comprises means to measure the difference in current before and after operating the one or more lighting elements. As only one power line is used in the system, the malfunction of a lighting element can be easily detected by measuring the current through the power line before switching on a lighting element and after switching on this lighting element. If no difference in current is measured, the lighting element is malfunctioning. The malfunctioning of this lighting element is communicated back to the towing vehicle, for example by setting a specific control line, which is connected to the towing vehicle to high impedance.

### The invention will be further elucidated by the following figures, where:

Figure 1 shows a schematic view of a trailer lighting system according to the current state of the art;
Figure 2 shows a schematic view of the trailer lighting system according to the invention;
Figure 3 show a trailer equipped with a trailer lighting system of Figure 2;

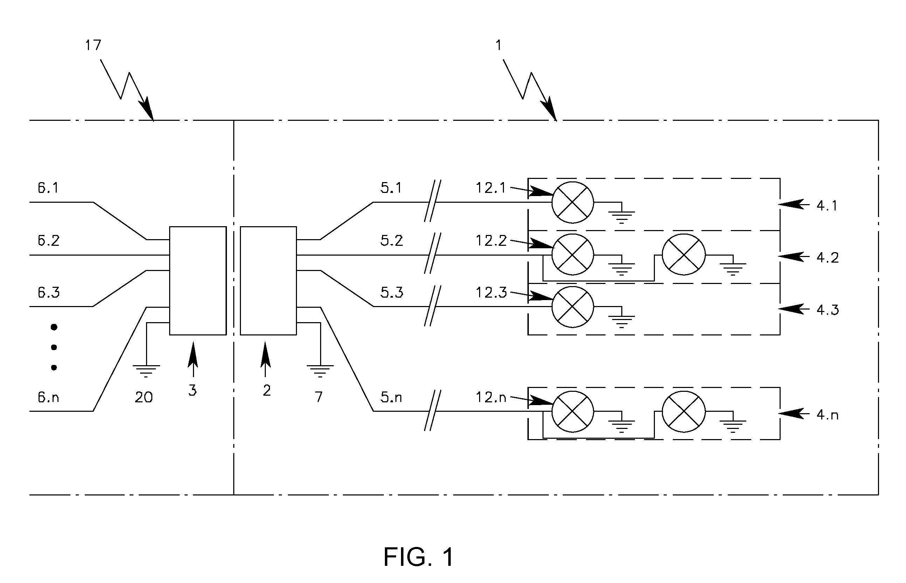

Figure 1 shows a schematic view of a trailer lighting system 1 according to the current state of the art. The trailer lighting system 1 is connected to the towing vehicle 17 through connector 2 of the trailer lighting system and connector 3 of the towing vehicle. Every light group 4₁ to 4ₙ is connected by wires 5₁ to 5ₙ to the corresponding wires 6₁ to 6ₙ. A light group is formed by connecting light elements to the same wire. The system has a common ground 7, which is connected to the common ground of the vehicle 20. This may be a separate wire.

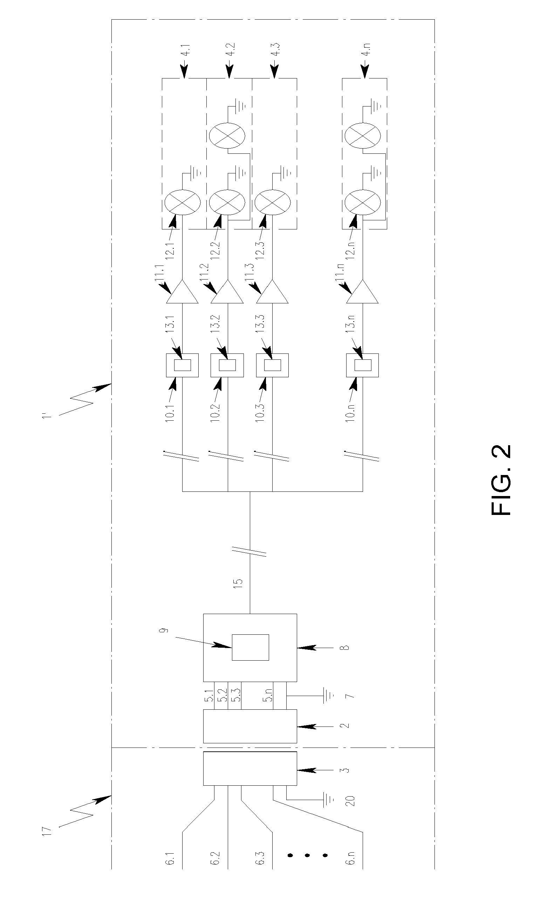

Figure 2 shows a schematic view of the trailer lighting system 1' according to the invention. The trailer lighting system 1' is connected to the towing vehicle 17 through connector 2 of the trailer lighting system and connector 3 of the towing vehicle 17. The wires 5₁ to 5ₙ of the trailer lighting system are connected to the corresponding wires 6₁ to 6ₙ of the vehicle. At the other end wires 5₁ to 5ₙ are connected to the controller 8. The controller 8 is provided with an encoder 9. The controller 8 is preferably placed on a small Printed Circuit Board (PCB). Detection means 10ₙ is connected to switching means 11ₙ, which in turn is connected to light element 12_{n.} Detections means 10ₙ is also connected to identifying means 13_{n.} Light element 12ₙ is connected to common ground of the vehicle 7. The detection means 10ₙ, identifying means 13ₙ, and switching means 11ₙ are preferable placed on a small PCB. The controller 8 is connected to the detection means 10₁,...,10ₙ through the common power line 15. The lighting elements 12₁ to 12ₙ are arranged in lighting groups 4₁ to 4ₙ by setting the identifying means 13₁ to 13ₙ accordingly. As an example one can assign the two brake lights 12₁ and 12₂ of a trailer to lighting group 4₁.

Three possible embodiments of the trailer lighting system according to the invention will now be discussed.

In the preferred embodiment the controller 1' controls the lighting elements 12₁ to 12ₙ through a sequence of pulses, in which the number of pulses depends on the active lighting groups. These pulses are superimposed on the power line 15 of the trailer lighting system 1'. Each lighting group 4ₖ (where k=1,2,...n) is assigned a fixed number of pulses, where the number of pulses = 2^{k}, e.g. for lighting group (1) 2 pulses are generated, for lighting group (2) 4 pulses are generated, for lighting group (3) 8 pulses are generated etc. The sequence of pulses always start with a start pulse and for each active lighting group (k) 2k pulses are added (where k= 1, 2,...n).This sequence of pulses will be repeated continuously with a small amount of time between two subsequent sequence of pulses. The detection means 10₁,...,10ₙ detects the beginning and end of these sequence of pulses that are superimposed on the power line 5 and counts the number of pulses in this set. Based on the number of pulses counted and the setting of the identifying means 13ₙ, the detection means 10ₙ will activate the switching means 11ₙ in order to active the lighting element 12_{n.} For example, if 11 pulses are counted, lighting groups 4₁ (2 pulse), lighting group 4₃ (8 pulses) must be active. The identifying means, detection means and the switching means are preferably situated nearby the lighting element.

In the second embodiment of the trailer lighting system according to the invention the lighting elements 12₁ to 12ₙ are also controlled by the controller 8 using a repetitive sequence of pulses. However, in this embodiment the length of the sequence is fixed. The pulse sequence represents a bit sequence, starting with a start bit, intermediate bits, parity bits and a stop bit. Each bit in the intermediate bits represents a lighting group. To activate a lighting group, the corresponding bit must be active. For example, a typical trailer lighting configuration has 7 light groups. Therefore the intermediate bits have a fixed length of 7 bits. In order to activate the first, the second and the last lighting group, bit 1,2 and 7 must be active. The detection means detects the sequence of pulses. Based on the intermediate bits found in the sequence of pulses and the identifying means, the detection means will activate the switching means in order to active the lighting element. The identifying means, detection means and the switching means are preferably situated nearby the lighting element.

In the third embodiment of the trailer lighting system according to the invention the trailer lighting system uses different sine waves with different frequencies to establish communication between the controller and the detection means. For each active light group, the controller generates a corresponding sine wave frequency by a sine wave generator. The different sine waves are superimposed on the power line of the trailer lighting system. Using the identifying means, the detection means detects the sine wave frequency for a specific light group. If this sine wave is detected, the detection means will active the switching means in order to active the lighting element. The identifying means, detection means and the switching means are preferably situated nearby the lighting element.

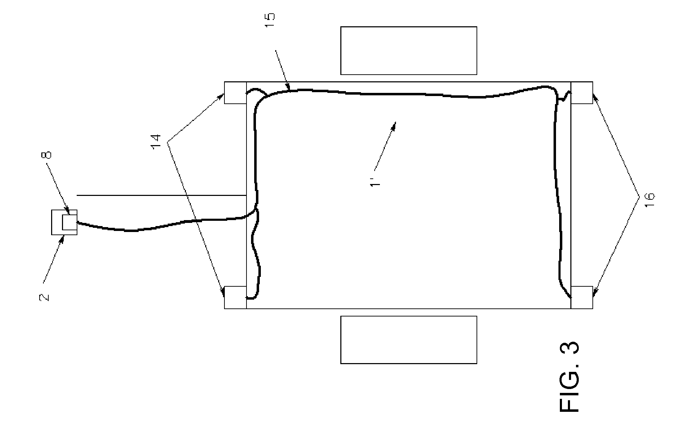

Figure 3 shows a trailer equipped with a trailer lighting system according to the invention. The trailer lighting system 1'is connected to the towing vehicle via connector 2. The controller 8 is preferably placed inside the connector 2. In the preferred embodiment of the trailer lighting system according to the invention the controller superimposes the control signals on the power line 15. Therefore only one wire 15 is needed to connect all lights of the trailer. The chassis can be used as ground, however a separate ground cable can also be used to reduce noise and disturbances in the system. In this figure the outline marker lights 14 and tail lights 16 are connected to the same power line. The identifying means, the detection means and the switching means are preferably integrated in each light of the trailer.

Identifying means are available in the art. An example of an adjustable identifying means is a dipswitch. It can be used to set the function of the light element.

The invention is not limited to the shown and described preferred embodiments, but extends generally to any embodiment which falls within the scope of the appended claims as seen in light of the foregoing description and drawings.

## Claims

1. Trailer lighting system comprising connection means for connecting the system to a towing vehicle, lighting elements and wiring for interconnecting said connection means and/or said lighting elements **characterized in**
**that** the system is provided with a controller connected to the connections means and the lighting elements, wherein the controller has encoding means for operating the lighting elements by sending encoded control signals to the lighting elements using a communication protocol, and that the system is further provided with identifying means, detection means and switching means wherein the identifying means are arranged for identifying the intended function of the lighting elements, the detection means are arranged for receiving said encoded control signals, for decoding the control signals and for operating the switching means in order to operate the lighting elements and that all elements of the system are provided with a common power line.

2. System according to claim 1, wherein the controller comprises pulse generation means and the detection means comprises pulse counting means, and wherein the lighting elements are controlled by the controller using a pulse based serial communication protocol.

3. System according to claim 2, wherein said identifying means are used to group said lighting elements into lighting groups and said communication protocol comprises a start pulse and for each active lighting group k 2^{k} pulses, wherein k= 1, 2, ...,n

4. System according to claim 2, wherein said identifying means are used to group said lighting elements into lighting groups and said communication protocol comprises a start pulse, a sequence of n pulses in a defined time frame, where n is at least the number of lighting groups and spaced apart by a defined period, and optionally a parity pulse and one or more stop pulses.

5. System according to claim 1, wherein the controller comprises means for simultaneous generation of multiple sine waves with different frequency and the detection means comprises sine wave frequency detection means, and wherein the lighting elements are controlled by the controller using a frequency based parallel communication protocol.

6. System according to claim 1 to 5, wherein the control signals are superimposed on the common power line of the system.

7. System according to claim 1 to 6, wherein the controller and the lighting elements are interconnected by the wiring in a parallel fashion.

8. System according to claim 1 to 7, wherein the controller is integrated into the connection means.

9. System according to claim 1 to 8, wherein the detection means and switching means are integrated into the lighting elements.

10. System according to claim 1 to 9, wherein the controller is further provided with means for detection of a malfunctioning of one or more lighting elements and means for communication said malfunctioning to the towing vehicle.

11. System according to claim 10, wherein the means for detection of a malfunctioning of one or more lighting elements comprises means to measure the difference in current before and after operating the one or more lighting elements.
